# EUROPÄISCHE PATENTSCHRIFT

(11) **EP 1 068 461 B1**
(45) Veröffentlichungstag und Bekanntmachung des Hinweises auf die Patenterteilung: **12.09.2001**
(21) Anmeldenummer: 99916902.2
(22) Anmeldetag: 01.04.1999
(51) Int. Cl.: F16H 7/18

(54) **FÜHRUNGSELEMENT**
GUIDE ELEMENT
ELEMENT DE GUIDAGE

(30) Priorität: 03.04.1998 DE 19815101
(43) Veröffentlichungstag der Anmeldung: 17.01.2001
(73) Patentinhaber: EBERT Kettenspanntechnik GmbH, 04509 Freiroda (DE)
(72) Erfinder: EBERT, Siegfried, D-04509 Freiroda (DE); MEIER, Hartmut, D-06800 Jessnitz (DE)
(74) Vertreter: Tetzner, Michael, Dipl.-Ing.
(86) Internationale Anmeldenummer: EP9902240
(87) Internationale Veröffentlichungsnummer: WO9951893

(56) Entgegenhaltungen:
- EP-A- 0 778 428
- DE-B- 1 036 596
- US-A- 5 593 366

## Beschreibung

Die Erfindung betrifft ein Führungselement für eine Rollenkette gemäß dem Oberbegriff des Anspruches 1.

In der DE-AS 1 036 596 wird ein Kettentrieb mit einer Rollenkette beschrieben, die eine U-förmige Führung aufweist, die die Kette tunnelartig auf drei Seiten umgibt und aus elastischem, geräuschdämpfenden Werkstoff besteht.

Aus der EP-A-0 778 428 ist ferner eine Kettenführungsund Gleitschiene zum Führen und Spannen von Ketten bekannt, wobei die die Kettenauflage bildende Oberfläche der Gleitschiene mit einer Vielzahl von Schmieröltaschen versehen ist, die im Bereich der Kettenlaschen symmetrisch oder asymmetrisch angeordnet sind. Die Schmieröltaschen sorgen dafür, daß in allen Betriebszuständen eine ausreichende Schmierölmenge im Bereich der Kettenführungs- und Gleitschiene vorhanden ist, um die Reibung und den Verschleiß herabzusetzen. Sie bewirken zudem eine Dämpfung der Geräuschentwicklung des Kettentriebes.

Da bei dieser bekannten Kettenführungs- und Gleitschiene die Rollenkette mit ihren Laschen auf der Gleitoberfläche geführt wird, findet eine Schmiermittelförderung an die tiefer im Kettengelenk und in den Rollen liegenden Reibflächen nicht statt.

Aus der Praxis sind ferner Führungselemente für Rollenketten gemäß dem Oberbegriff des Anspruches 1 bekannt, die eine Rollenwälzfläche vorsehen, auf der die Rollen eine Abrollbewegung ausführen. Dabei ergibt sich der Effekt, daß sich die Rollen beim Abrollen auf den fertigungsbedingt stets tonnenförmigen Buchsen bereits bei geringsten Ungleichmäßigkeiten der Achslagen des Kettentriebes aus einer instabilen Lage heraus gegen die wie feste Anschläge wirkenden Innenseiten der Lasche ausrichten. Dabei kommen sie auf der Anschlagseite in Kontakt mit den Laschen, verschließen dabei den Schmierspalt und reiben rotierend gegen die Laschen bzw. gegen die Kehlen der Lasche-Buchse-Verbindung, während sie auf der Gegenseite einen vergrößerten Spalt bilden. Dabei entstehen Vorzugsordnungen der Kettengelenke, die sich beim Kettenlauf mit hoher Wahrscheinlichkeit wiederholen, so daß sich einseitige Reibungsflächen bilden, die einen vorzeitigen Verschleiß der Kette begünstigen.

Der Erfindung liegt daher die Aufgabe zugrunde, das Führungselement für eine Rollenkette gemäß dem Oberbegriff des Anspruches 1 derart weiterzubilden, daß der Verschleiß der Kette verringert wird.

Erfindungsgemäß wird die Aufgabe durch die kennzeichnenden Merkmale des Anspruches 1 dadurch gelöst, daß der Kontaktbereich des Führungselements eine Rollenwälzfläche bildet, mit der die Rollen der Rollenkette in Berührung kommen und wobei der Kontaktbereich eine die Rollen quer zur Laufrichtung der Rollenkette führende Oberflächengestalt aufweist, die auf die Rollen derart einwirkt, daß diese auf den Buchsen abwechselnd zwischen den beiden Laschen hin- und herbewegt werden.

Durch die querführende Oberflächengestalt dient das Führungselement nicht nur zum Längsführen der Rollenkette, sondern löst zudem eine den Verschleiß begünstigende Ordnung der Kettengelenke auf. Dies wird durch die axiale Verschiebung der Elemente der Kettengelenke in Folge der außermittig angreifenden Stützkraft der Oberfläche und durch das Querdriften der Rollen während ihrer Abrollbewegung um die tonnenförmigen Buchsen bewirkt. Die einseitigen, sich wiederholenden Reibungsflächen werden dadurch reduziert, und es entstehen in starker Zufallsfolge ständig neue Kontaktflächen der Reibungspartner in den Kettengelenken, so daß sich eine gleichmäßigere Verteilung des Verschleisses auf eine größere Gesamtfläche ergibt, und somit die Lebensdauer der Kette verlängert werden kann.

Weitere Ausgestaltungen der Erfindung sind Gegenstand der Unteransprüche.

Bei einer vorteilhaften Ausgestaltung des Führungselementes ist die Oberflächengestalt taumelnd-wellenbandförmig ausgebildet.

In einem weiteren Ausführungsbeispiel wird die Oberflächengestalt durch einen erhaben ausgebildeten, elastischen Teilbereich gebildet, der - in der Draufsicht auf den Kontaktbereich - wellenförmig in der Laufrichtung der Rollenkette verläuft. In einer speziellen Ausgestaltung dieses Ausführungsbeispieles weist das Führungselement eine - in der Draufsicht auf den Kontaktbereich - wellenförmig verlaufende Nut auf, in der ein elastisches, vorzugsweise schlauchförmiges Element eingelegt ist.

In einem dritten Ausführungsbeispiel weist die Oberflächengestalt Vertiefungen in der Rollenwälzfläche zum Ableiten eines sich in Zugrichtung der Rollenkette vor einer Rolle aufbauenden Schmiermittelkeils auf, wobei die Längserstreckung der Vertiefungen schräg zur Längsachse der Führungsschiene ausgerichtet ist und aufeinanderfolgende Vertiefungen jeweils versetzt spiegelbildlich zur Längsachse ausgebildet sind.

Weitere Ausgestaltungen und Vorteile der Erfindung sind Gegenstand der nachfolgenden Beschreibung einiger Ausführungsbeispiele und der Zeichnung.

In der Zeichnung zeigen
- Fig.1a: eine Draufsicht eines Führungselementes gemäß einem ersten Ausführungsbeispiel,
- Fig.1b: eine Seitenansicht des Führungselementes gemäß Fig.1a,
- Fig.1c: eine Draufsicht der auf dem Führungselement gemäß 1a abrollenden Rollenkette,
- Fig.1d: eine Schnittdarstellung des Führungselementes mit horizontal ausgerichteter Rollenkette,
- Fig.1e: eine Schnittdarstellung auf Höhe von E in Fig.1c,
- Fig.1f: eine Schnittdarstellung auf Höhe von F in Fig.1c,
- Fig.2a: eine Draufsicht eines Führungselementes gemäß einem zweiten Ausführungsbeispiel,
- Fig.2b: eine Draufsicht der auf dem Führungselement gemäß 2a abrollenden Rollenkette,
- Fig.2c: eine Schnittdarstellung auf Höhe der Rollenachse längs der Linie C-C der Figuren 2a, 2b,
- Fig.2d: eine Schnittdarstellung längs der Linie D-D, vor der Rolle gelegen,
- Fig.2e: eine Schnittdarstellung längs der Linie E-E, ebenfalls vor der Rolle gelegen,
- Fig.3a: eine Draufsicht eines Führungselementes gemäß einem dritten Ausführungsbeispiel,
- Fig.3b: eine Draufsicht der auf dem Führungselement gemäß 3a abrollenden Rollenkette,
- Fig.3c: eine Schnittdarstellung längs der Linie C-C der Figuren 3a, 3b,
- Fig.3d: eine Schnittdarstellung längs der Linie D-D,
- Fig.3e: eine Schnittdarstellung längs der Linie E-E.

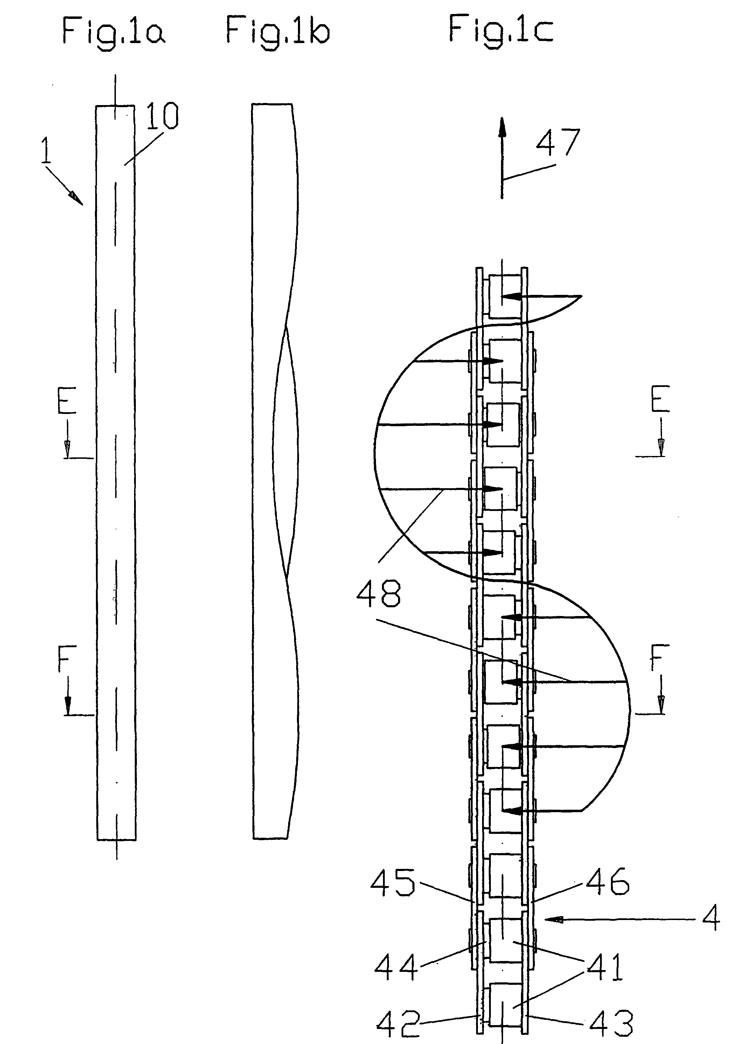

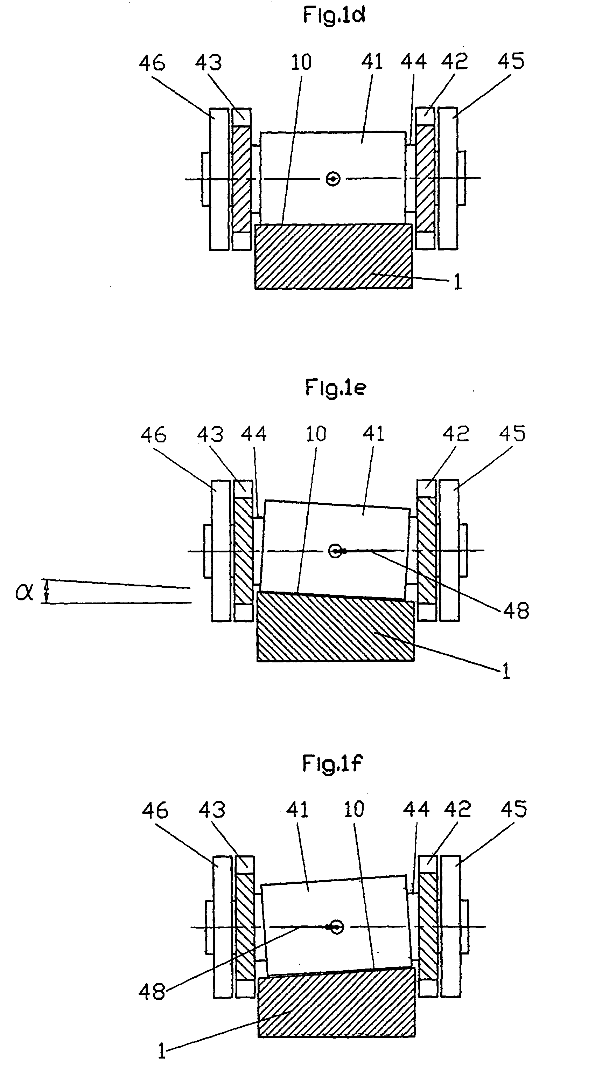

In den Figuren 1a bis 1f ist ein erstes Ausführungsbeispiel eines Führungselementes 1 für eine Rollenkette 4 dargestellt. Das Führungselement 1 weist einen Kontaktbereich 10 auf, der als Rollenwälzfläche ausgebildet ist.

Die Rollenkette 4 weist eine Vielzahl von Rollen 41 auf, die zwischen jeweils zwei Laschen 42, 43 mit seitlichem Spiel auf Buchsen 44 geführt sind. Die einzelnen Kettenglieder, bestehend aus zwei gegenüberliegenden Laschen 42, 43 mit zwei dazwischen angeordneten Buchsen 44 und Rollen 41, sind über Außenlaschen 45, 46 miteinander verbunden.

Die Rollenkette 4 wird derart auf dem Führungselement 1 geführt, daß die Rollen 41 mit dem Kontaktbereich 10 in Berührung kommen und dabei eine Abrollbewegung ausführen.

Die Rollenwälzfläche 10 weist eine die Rollen 41 quer zur Laufrichtung 47 der Rollenkette 4 führende Oberflächengestalt auf, die auf die Rollen 41 derart einwirkt, daß diese während der Kettenbewegung in Laufrichtung auf den Buchsen 44 abwechselnd zwischen den beiden Laschen 42, 43 hin- und herbewegt werden.

Die Rollenwälzfläche 10 ist taumelnd-wellenbandförmig ausgebildet, wie sich insbesondere aus den Figuren 1b, 1d, 1e und 1f ergibt. Die Rollenwälzfläche 10 wird demnach durch eine in der Laufrichtung der Kette periodisch um den Winkel α verdrehte Fläche gebildet.

Die Rollenwälzfläche 10 geht somit kontinuierlich von einer Extremposition gemäß Fig.1e in die andere Extremposition gemäß Fig.1f über, wobei die Rollenwälzfläche in der Schnittdarstellung gemäß Fig.1e um den Winkel α nach links und in Fig.1f um den entsprechenden Winkel nach rechts geneigt ist. Fig.1d zeigt die Rollenwälzfläche 10 zwischen diesen beiden Extrempositionen. Der Winkel α beträgt vorzugsweise weniger als 10° gegenüber der neutralen bzw. horizontalen Ausrichtung gemäß Fig.1d.

Die Rollen 41 der Rollenkette 4 folgen der gewellten Rollenwälzfläche und vollführen dabei auf den Buchsen 44 eine hin- und hergehende axiale Bewegung zwischen den Laschen 42, 43. Dabei werden stetig neue Berührungsflächen zwischen den Reibpartnern Rolle und Buchse erzeugt und vorhandenes Schmiermittel in die Tiefe des Spaltes zwischen den Reibpartnern gefördert.

In Leertrumabschnitten des Kettentriebes wird ein leichtes Verwinden der Kettengelenke gegeneinander erreicht, wodurch auch die anderen Bereiche der Kettengelenke stets neue Reibflächen bilden und mit Schmiermittel versorgt werden.

Die Periode der taumelnd-wellenbandförmigen Oberfläche der Rollenwälzfläche 10 beträgt mindestens das vierfache Maß der Kettenteilung. Dadurch folgen benachbarte Rollen der Wellenbandform in die gleiche Richtung quer zum Band und die Seitenkräfte innerhalb des Innengliedes heben sich nicht gegenseitig auf.

In Fig.1c sind die durch die Oberflächengestalt des Kontaktbereichs auf die Rollen 41 wirkenden Kräfte 48 dargestellt. Diese seitlich wirkenden Kräfte wirken in axialer Richtung der Rollen, d.h. quer zur Laufrichtung 47 der Kette. Je nach Ausrichtung der Rollenwälzfläche 10 an einer bestimmten Stelle des Führungselements wirken diese Kräfte in Richtung auf die Innenlasche 43 bzw. Innenlasche 44.

Die Rollenwälzfläche 10 ist derart strukturiert, daß die auf der Rollenwälzfläche abrollenden Rollen 41 stets aus dem Kontakt mit einer Lasche als Extremlage in eine neue Lage gebracht werden.

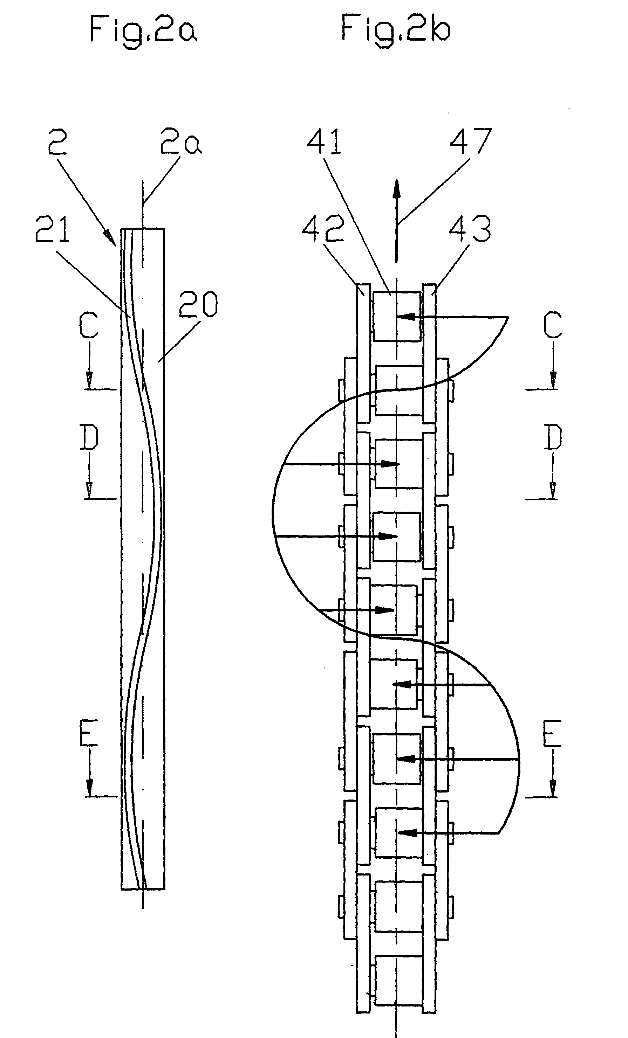

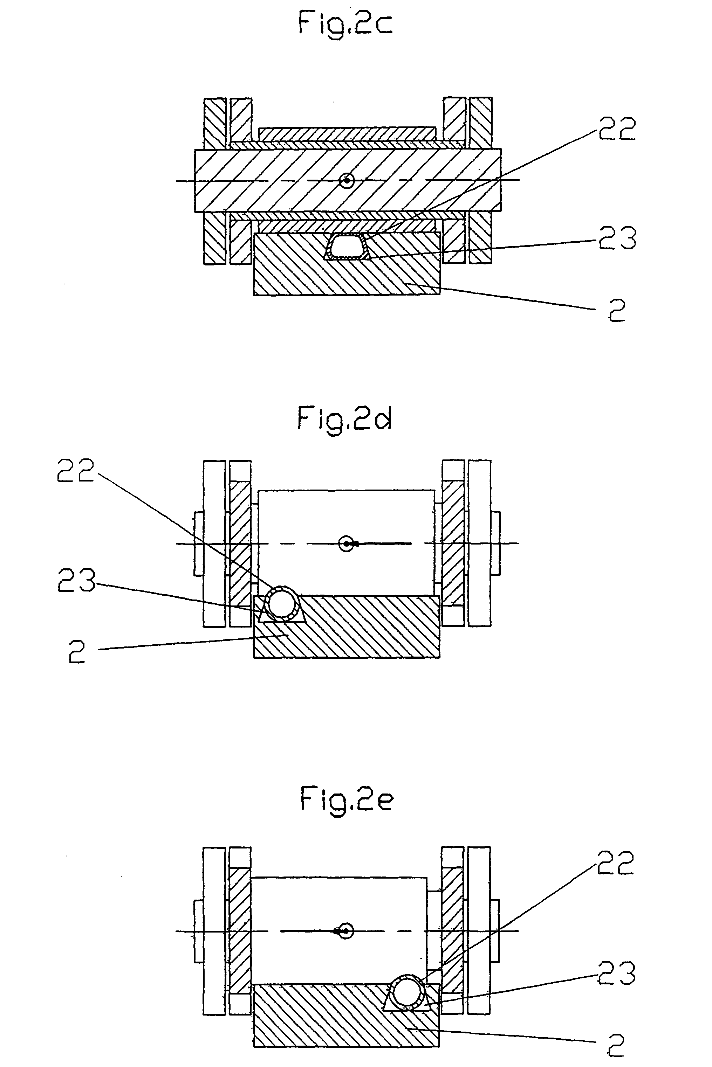

In den Figuren 2a bis 2e ist ein zweites Ausführungsbeispiel eines Führungselements 2 dargestellt, dessen Kontaktbereich 20 eine Oberflächengestalt vorsieht, die einen erhaben ausgebildeten, elastischen Teilbereich 21 aufweist. Dieser elastische Teilbereich 21 wird durch ein elastisches Element 22 gebildet, das in einer Nut 23 des Führungselements 2 angeordnet ist, wobei die Nut - in der Draufsicht gemäß Fig.2a - wellenförmig um die Längsachse 2a des Führungselementes 2 verläuft. Das elastische Element 22 ist beispielsweise schlauchförmig ausgebildet.

Die Erstreckung des elastischen Bereichs quer zur Längsachse 2a beträgt weniger als die Hälfte der Breite des Führungselementes 2, vorzugsweise etwa ein Viertel der Breite.

Die Nut 23 im Führungselement 2 ist im Querschnitt schwalbenschwanzförmig ausgebildet und bietet somit dem schlauchförmigen elastischen Element 22 ausreichend Platz, um sich bei Belastung durch die Rollen 41 deformieren zu können.

Das elastische Element 22 bildet vor den Rollen 41 eine vorauseilende, elastische Verdrängungswelle, die zu einem größeren Rollwiderstand führt und dadurch auf die Rollen derart einwirkt, daß sie auf den Buchsen abwechselnd zwischen den beiden Laschen hin- und herbewegt werden.

Die Periode der wellenförmigen Nut 23 beträgt mindestens das vierfache Maß der Kettenteilung. Dadurch folgen benachbarte Rollen der Form des elastischen Elements in die gleiche Richtung quer zum Führungselement und die Seitenkräfte innerhalb eines Kettengliedes heben sich nicht gegenseitig auf.

An beiden Enden des Führungselements 2 verlaufen die Nut 23 und das elastische Element 22 vorzugsweise in der Mitte des Führungselementes 2 in Laufrichtung 47 der Rollenkette 4, wodurch die Rollen 41 der Rollenkette 4 in die Mittellage zwischen den Laschen 42, 43 bewegt werden und somit die beste Stellung für den Eingriff mit einem nachfolgenden Kettenrad vorliegt.

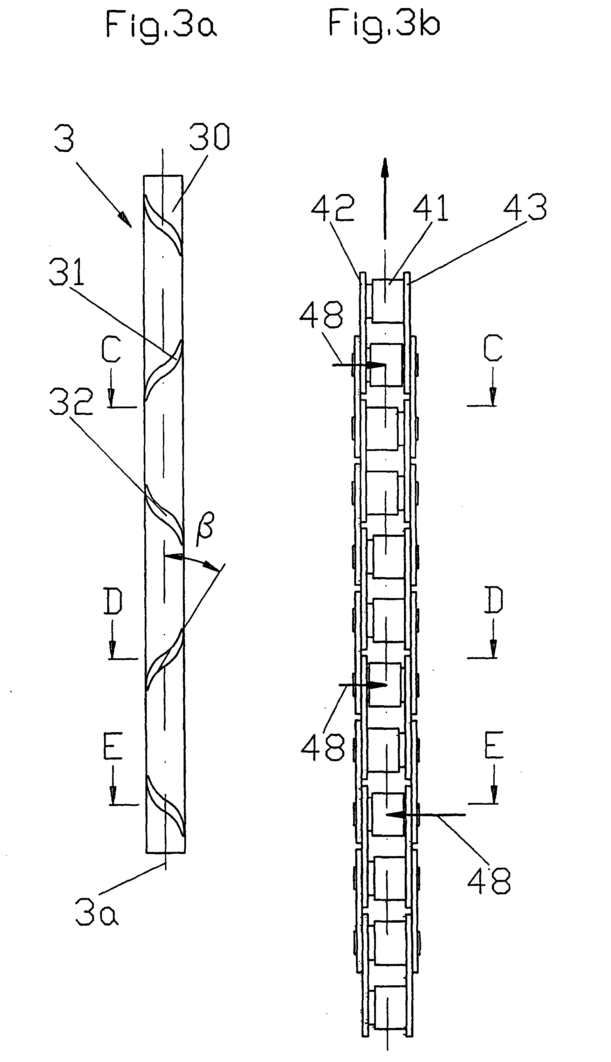

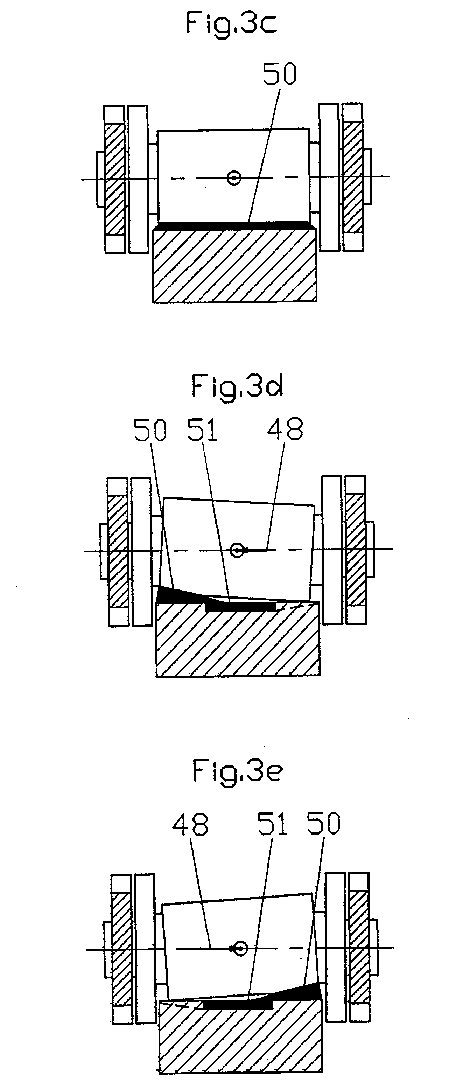

In den Figuren 3a bis 3e ist ein drittes Ausführungsbeispiel eines Führungselementes 3 gezeigt, das sich dadurch auszeichnet, daß sein Kontaktbereich 30 Vertiefungen 31, 32 zum Ableiten eines sich in Zugrichtung der Rollenkette 4 vor einer Rolle 41 aufbauenden Schmiermittelkeils 50 aufweist. Die Vertiefungen 31, 32 sind derart in bezug auf die Längsachse 3a ausgerichtet, daß deren Längserstreckung mit einem Winkel β schräg zur Längsachse der Führungsschiene ausgerichtet ist, wobei aufeinanderfolgende Vertiefungen 31, 32 jeweils spiegelbildlich versetzt zur Längsachse 3a ausgebildet sind. Vorzugsweise ist der aus Fig.3a ersichtliche Winkel β größer 30° und kleiner 35°.

Die Vertiefungen 31, 32 sind als offene Abströmkanäle ausgebildet, in die das jeweils vor einer Rolle 41 sich anstauende Schmiermittel abfließen kann.

Ab einer bestimmten Kettengeschwindigkeit bzw. Schmiermittelviskosität, kommt es zu einem Schmiermittelkeil 50. Durch die schräg zur Längsachse 3a verlaufenden Vertiefungen kann der Schmiermittelkeil 50 zunächst auf einer Seite abfließen, wodurch es auf dieser Seite zu einem einseitig reduzierten Auftrieb und auf der anderen Seite zu einem einseitig erhöhten Auftrieb durch den weiterhin bestehenden Schmiermittelkeil in Verbindung mit einseitig erhöhter Bremskraft kommt. Durch die jeweils spiegelbildlich versetzt zur Längsachse 3a angeordneten Vertiefungen werden abwechselnd Kräfte von der einen und der anderen Seite erzeugt, so daß die Rollen in Verbindung mit ihrer Abrollbewegung auf der Kontaktfläche 30 eine hin- und hergehende axiale Bewegung zwischen den Laschen 42, 43 vollführen. Mit dieser Bewegung wird das Schmiermittel als Film auf die Reibungspartner Buchse/Rolle verteilt. Das einseitige Aufgleiten bzw. Nichtaufgleiten der Rollen 41 bewirkt auch in Leertrumabschnitten des Kettentriebes ein leichtes Verwinden der Kettengelenke im Betrag ihres radialen Lagerspiels, wodurch auch andere Bereiche der Kettengelenke stets neue Reibungsflächen bilden und mit Schmiermittel versorgt werden.

Die Führungselemente 1, 2, 3 bestehen vorzugsweise aus einem verschleißfesten Kunststoffmaterial.

## Patentansprüche

1. Führungselement (1, 2, 3) für eine Rollenkette (4), wobei
- die Rollenkette (4) eine Vielzahl von Rollen (41) aufweist, die jeweils zwischen zwei Laschen (42, 43) mit seitlichem Spiel auf Buchsen (44) geführt sind,
- und das Führungselement einen Kontaktbereich (10, 20, 30) aufweist, der mit den Rollen der Rollenkette in Berührung kommt,
**dadurch gekennzeichnet, daß**
- der Kontaktbereich (10, 20, 30) des Führungselements eine Rollenwälzfläche bildet, wobei der Kontaktbereich eine die Rollen quer zur Laufrichtung (47) der Rollenkette (4) führende Oberflächengestalt aufweist, die auf die Rollen (41) derart einwirkt, daß diese auf den Buchsen (44) abwechselnd zwischen den beiden Laschen (42, 43) hin- und herbewegt werden.

2. Führungselement nach Anspruch 1, **dadurch gekennzeichnet, daß** die Oberflächengestalt durch Erhebungen und/oder Vertiefungen in der Rollenwälzfläche gebildet werden.

3. Führungselement nach Anspruch 1, **dadurch gekennzeichnet, daß** die Oberflächengestalt taumelnd-wellenbandförmig ausgebildet ist.

4. Führungselement nach Anspruch 1, **dadurch gekennzeichnet, daß** die Oberflächengestalt einen erhabenen, elastischen Teilbereich (22) ausbildet.

5. Führungselement nach Anspruch 4, **dadurch gekennzeichnet, daß** der elastische Teilbereich durch ein elastisches Element (22) gebildet wird, das in einer Nut (23) des Führungselements (2) angeordnet ist, die - in der Draufsicht des Kontaktbereiches - wellenförmig verläuft.

6. Führungselement nach Anspruch 5, **dadurch gekennzeichnet, daß** das elastische Element (22) schlauchförmig ausgebildet ist.

7. Führungselement nach Anspruch 1, **dadurch gekennzeichnet, daß** die Oberflächengestalt Vertiefungen (31, 32) in der Rollenwälzfläche zum seitlichen Ableiten eines sich in Zugrichtung der Rollenkette (4) vor einer Rolle (41) aufbauenden Schmiermittelkeils (50) aufweist.

8. Führungselement nach Anspruch 7, **dadurch gekennzeichnet, daß** die Längserstreckung der Vertiefungen (31, 32) schräg zur Längsachse (3a) der Führungsschiene (3) ausgerichtet ist, wobei aufeinanderfolgende Vertiefungen (31, 32) jeweils versetzt spiegelbildlich zur Längsachse (3a) ausgebildet sind.

## Claims

1. Guide element (1, 2, 3) for a roller chain (4), wherein
- the roller chain (4) has a plurality of rollers (41) which are each guided on bushes (44) between two sideplates (42, 43) with a lateral clearance,
- and the guide element has a contact zone (10, 20, 30) which comes into contact with the rollers of the roller chain,
**characterized in that**
- the contact zone (10, 20, 30) of the guide elements forms a rolling surface, the contact zone having a surface design which guides the rollers transversely with respect to the running direction (47) of the roller chain (4) and acts on the rollers (41) in such a way that they are moved to and fro alternately on the bushes (44) between the two sideplates (42, 43).

2. Guide element as claimed in Claim 1, **characterised in that** the surface design is formed by raised areas and/or recesses in the rolling surface.

3. Guide element as claimed in Claim 1, **characterised in that** the surface design is constructed so that it wobbles in wave band form.

4. Guide element as claimed in Claim 1, **characterised in that** the surface design is formed by a raised part-zone (22).

5. Guide element as claimed in Claim 4, **characterised in that** the resilient part-zone is formed by a resilient element (22) which is disposed in a groove (23) in the guide element (2) which - viewed in plan view of the contact zone - extends in a wavy manner.

6. Guide element as claimed in Claim 5, **characterised in that** the resilient element (22) is of tube-like construction.

7. Guide element as claimed in Claim 1, **characterised in that** the surface design has recesses (31, 32) in the rolling surface for laterally leading off a wedge of lubricant (50) which builds up in front of a roller (41) in the pulling direction of the roller chain (4).

8. Guide element as claimed in Claim 7, **characterised in that** the longitudinal extent of the recesses (31, 32) is aligned obliquely with respect to the longitudinal axis (3a) of the guide rail (3) and successive recesses (31, 32) are each constructed offset in mirror image with respect to the longitudinal axis (3a).

## Revendications

1. Elément de guidage (1, 2, 3) pour une chaîne à rouleaux (4), dans lequel
- la chaîne à rouleaux (4) comporte une multiplicité de rouleaux (41), qui sont guidés respectivement entre deux éclisses (42, 43) avec un jeu latéral sur des douilles (44), et
- l'élément de guidage possède une zone de contact (10, 20, 30), qui vient en contact avec les rouleaux de la chaîne à rouleaux,
**caractérisé en ce que**
- la partie de contact (10, 20, 30) de l'élément de guidage forme une surface de roulement des rouleaux, la zone de contact possédant une configuration de surface qui guide les rouleaux transversalement par rapport à la direction de circulation (47) de la chaîne à rouleaux (4) et qui agit sur les rouleaux (41) de telle sorte que ces derniers sont déplacés alternativement en va-et-vient sur les douilles (44) entre les deux éclisses (42, 43).

2. Elément de guidage selon la revendication 1,
**caractérisé en ce que** la configuration de surface est formée par des parties surélevées et/ou des renforcements dans la surface de roulement des rouleaux.

3. Elément de guidage selon la revendication 1,
**caractérisé en ce que** la configuration de surface est agencée sous la forme d'une bande ondulée en nutation.

4. Elément de guidage selon la revendication 1,
**caractérisé en ce que** la configuration de surface forme une zone partielle élastique surélevée (22).

5. Elément de guidage selon la revendication 4,
**caractérisé en ce que** la zone partielle élastique est formée par un élément élastique (22), qui est disposé dans une rainure (23) de l'élément de guidage (1) qui s'étend avec une forme ondulée - lorsqu'on regarde la zone de contact selon une vue en plan.

6. Elément de guidage selon la revendication 5,
**caractérisé en ce que** l'élément élastique (22) est agencé en forme de tuyau.

7. Elément de guidage selon la revendication 1,
**caractérisé en ce que** la configuration de surface comporte des renfoncements (31, 32) formés dans la surface de roulement des rouleaux pour l'extraction latérale d'un coin d'agent lubrifiant (50) qui se forme en amont des rouleaux (41), dans la direction de traction de la chaîne à rouleaux (4).

8. Elément de guidage selon la revendication 7,
**caractérisé en ce que** l'étendue longitudinale des renfoncements (31, 32) s'étend obliquement par rapport à l'axe longitudinal (3a) du rail de guidage (3), des renfoncements successifs (31, 32) étant formés en étant respectivement décalés symétriquement par rapport à l'axe longitudinal (3a).
